(19) Europäisches Patentamt / European Patent Office / Office européen des brevets

(11) **EP 4 556 258 A1**

(12) **EUROPEAN PATENT APPLICATION**

(43) Date of publication:
21.05.2025 Bulletin 2025/21

(21) Application number: 24211341.3

(22) Date of filing: 07.11.2024

(51) International Patent Classification (IPC):
*B60C 1/00* (2006.01)     *C08L 7/00* (2006.01)
*C08L 9/06* (2006.01)     *C08L 15/00* (2006.01)

(52) Cooperative Patent Classification (CPC):
(C-Sets available)
C08L 15/00; B60C 1/0016; C08L 7/00; C08L 9/06
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 16.11.2023 US 202318511487

(71) Applicant: **The Goodyear Tire & Rubber Company Akron, OH 44316 (US)**

(72) Inventors:
• **HAHN, Bruce Raymond**
  **Hudson, 44210 (US)**
• **PAPAKONSTANTOPOULOS, George Jim**
  **Medina, 44256 (US)**

(74) Representative: **Kutsch, Bernd**
  **Goodyear S.A.**
  **Patent Department**
  **Avenue Gordon Smith**
  **7750 Colmar-Berg (LU)**

(54) **SILICA-BASED RUBBER COMPOUND WITH IMPROVED HYSTERESIS AND DISPERSION**

(57) A rubber composition is disclosed comprising a plurality of silica particles, a nonionic surfactant having a hydrophilic lipophilic balance (HLB) value of from 8 to 14, and at least one rubber material. Also, a silica particle composition is disclosed comprising a plurality of silica particles and one or more nonionic surfactants selected from an alcohol ethoxylate, a random alcohol ethoxylate-propoxylate, a poloxamer, an alcohol ethoxysulfate, or any combination thereof. The rubber composition may be included in an article such as a tire of truck tire.

EP 4 556 258 A1

(52) Cooperative Patent Classification (CPC): (Cont.)

C-Sets
**C08L 7/00, C08L 71/02, C08K 3/36;**
**C08L 9/06, C08L 9/00, C08L 71/02, C08K 3/36;**
**C08L 15/00, C08L 9/00, C08L 71/02, C08K 3/36**

**Description**

BACKGROUND

High viscosity in uncured rubber compositions can create difficulties in processing. Strategies to reduce viscosity in rubber processing include increasing temperature of mixing steps; however, subjecting some rubbers, including but not limited to natural rubbers, to high temperatures can have detrimental effects on the rubbers. Furthermore, incorporating polar hydrophilic fillers such as silicas can also contribute to increased viscosity due to incompatibilities with hydrophobic rubbers. It would be desirable to reduce viscosity during mixing of uncured rubbers without resorting to the use of increased temperatures. It would additionally be desirable if the strategy to reduce viscosity during mixing also improved properties of the final rubber compositions and articles, such as tires, made using the same, including lower cured compound hysteresis for improved rolling resistance.

Rubber compositions useful in tires and other articles typically contain a filler material such as carbon black. Alternative filler materials such as, for example, silica, can offer desirable properties including improved hysteresis during processing, lower abrasion loss, better fuel economy, and better wet traction. However, incorporating silica into rubber compositions for use in truck tires can be difficult due to chemical incompatibilities, processing steps required for each material, and the like. It would thus be desirable to develop a better dispersant for silica filler material in rubber compositions.

Despite advances in rubber production research, there is still a scarcity of compounds and methods for incorporating polar hydrophilic silica fillers into hydrophobic rubber compositions. Cured rubber made according to the methods and articles made therefrom would have properties such as stiffness and tensile properties comparable to or better than currently used rubber compositions. These needs and other needs are satisfied by the present disclosure.

SUMMARY OF THE INVENTION

The invention relates to a rubber composition in accordance with claim 1, to a silica particle composition in accordance with claim 11, a rubber composition in accordance with claim 12 and to an article in accordance with claim 13.

In accordance with the purpose(s) of the present disclosure, as embodied and described herein, the disclosure, in one aspect, relates to rubber compositions including a plurality of silica particles, a nonionic surfactant having a hydrophilic lipophilic balance (HLB) value of from 8 to 14, and at least one rubber material. In preferred aspects, the nonionic surfactant can have the formula $CH_3$-$(CH_2)_n$-$(O$-$(CH_2)_x)_m$-$OR$; wherein n is an integer from 1 to 18; wherein x is an integer from 1 to 8; wherein m is an integer from 1 to 15; and wherein R is a branched or straight chain C1-C20 alkyl group.

Also disclosed are methods of making the rubber compositions and vulcanized rubber articles including tires and/or tire treads made from or including the rubber compositions.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims. In addition, all optional and preferred features and modifications of the described embodiments are usable in all aspects of the disclosure taught herein. Furthermore, the individual features of the dependent claims, as well as all optional and preferred features and modifications of the described embodiments are combinable and interchangeable with one another.

DETAILED DESCRIPTION OF PREFERRED EMBODIMENTS OF THE INVENTION

Many modifications and other embodiments disclosed herein will come to mind to one skilled in the art to which the disclosed compositions and methods pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. The skilled artisan will recognize many variants and adaptations of the aspects described herein. These variants and adaptations are intended to be included in the teachings of this disclosure and to be encompassed by the claims herein.

Prior to describing the various aspects of the present disclosure, the following definitions are provided and should be used unless otherwise indicated. Additional terms may be defined elsewhere in the present disclosure.

Definitions

As used herein, the terms "optional" or "optionally" means that the subsequently described event or circumstance can or cannot occur, and that the description includes instances where said event or circumstance occurs and instances where it does not.

As used herein, the term "phr" as used herein, and according to conventional practice, refers to "parts by weight of a respective material per 100 parts by weight of rubber or elastomer". The terms "rubber" and "elastomer" may also be used herein interchangeably, unless indicated otherwise.

As used herein, the term "phf" as used herein, refers to "parts by weight of a respective material per 100 parts by weight of filler".

A "residue" of a chemical species, as used in the specification and concluding claims, refers to the moiety that is the resulting product of the chemical species in a particular reaction scheme or subsequent formulation or chemical product, regardless of whether the moiety is actually obtained from the chemical species. For example, an ethylene glycol residue in a polyester refers to one or more $-OCH_2CH_2O-$ units in the polyester, regardless of whether ethylene glycol was used to prepare the polyester. Similarly, a sebacic acid residue in a polyester refers to one or more $-CO(CH_2)_8CO-$ moieties in the polyester, regardless of whether the residue is obtained by reacting sebacic acid or an ester thereof to obtain the polyester.

As used herein, the term "uncured rubber composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time.

As used herein, the term "cured rubber composition" refers to a rubber composition obtained by taking an uncured rubber composition and curing or vulcanizing it, often accomplished using sulfur compounds and/or other curing additives and in the presence of heat. Vulcanized or cured rubber does not undergo cold flow and is less sensitive to changes in temperature relative to uncured rubber. In another aspect, rubber compositions can be cured in molds in order to form finished articles including, but not limited to, tires.

Unless otherwise specified, pressures referred to herein are based on atmospheric pressure (i.e. one atmosphere).

Rubber

In some preferred aspects, the disclosed rubber compositions include a solution polymerized styrene-butadiene rubber (sSBR). In one aspect, the solution polymerization prepared SBR can have a bound styrene content in the range of from 5 percent to 50 percent, or from 9 percent to 26 percent. In a further aspect, the sSBR can be conveniently prepared by organolithium catalysis in the presence of a hydrocarbon solvent.

In another aspect, an emulsion polymerized styrene/butadiene (eSBR) can be used, wherein the eSBR has a styrene content of from 5 percent to 50 percent, or from 8 to 28 percent bound styrene. In a further aspect, by eSBR, it is meant that styrene and 1,3-butadiene are copolymerized as an aqueous emulsion.

In one aspect, natural rubber or synthetic cis-1,4 polyisoprene can be used.

In one aspect, a reference to glass transition temperature, or $T_g$, of an elastomer or elastomer composition, when used herein, represents the glass transition temperature(s) of the respective elastomer or elastomer composition in its uncured state or, in the case of an elastomer composition, in some aspects, $T_g$ can be measured in a cured state. $T_g$ is determined as a peak midpoint by a differential scanning calorimeter (DSC) using ASTM D7426 or equivalent.

In one preferred aspect, the solution polymerized styrene-butadiene rubber has a glass transition temperature in a range of from -85 °C to 0 °C, or from -85 °C to -50 °C, or from -40 °C to 0° C. In a further aspect, the styrene butadiene rubber can include a blend of two or more styrene-butadiene rubber having different $T_g$. In a further aspect, such a blend of styrene-butadiene rubbers can include functionalized SBRs, non-functionalized SBRs, or a combination of functionalized and non-functionalized styrene-butadiene rubbers.

Silica and Silica Dispersal in Hydrophobic Rubber Compositions

Precipitated silica is generally hydrophilic in nature and therefore has a greater affinity to itself, with less affinity to a diene-based elastomer in a rubber composition, which makes it difficult to obtain a satisfactory dispersion of the precipitated silica throughout the rubber composition. To address this need, precipitated silica may be mixed with a nonionic surfactant as disclosed herein. In one aspect, disclosed herein is a silica particle composition including a plurality of silica particles and at least one nonionic surfactant selected from an alcohol ethoxylate, a random alcohol ethoxylate-propoxylate, a poloxamer, an alcohol ethoxysulfate, another nonionic surfactant as disclosed herein, or any combination thereof. In some aspects, the silica particle compositions can be mixed with a rubber material to make a rubber composition, and articles can be formed therefrom.

In one aspect, an untreated silica is useful as a filler material in the rubber compositions described herein. In a further aspect, the untreated silica can be a prewashed, wet filter cake of precipitated silica having hydroxyl groups thereon. In a further aspect, the precipitated silica can be derived from rice husk ash or bagasse (sugar cane) ash, or the like, and need not be dried following washing and filtration of an acid-treated sodium silicate.

In one aspect, the untreated silica can have a particle size of less than 10 micrometers ($\mu$m), or less than 5 $\mu$m, or at least 0.1 $\mu$m, as determined by ASTM C721-20, "Standard Test Methods for Estimating Average Particle Size of Alumina and Silica Powders by Air Permeability." (Silica primary particles for rubber usage are usually in the 10 to 100 nanometer range, 0.01 to 0.1 micrometers) as measured by Differential Centrifugal Sedimentation (DCS).

Exemplary untreated precipitated silicas are available from PPG Industries as Hi-Sil™, e.g., under the designations 210, 243, 315, EZ 160G-D, EZ 150G, 190G, 200G-D, HDP-320G, and 255CG-D; from Solvay as Zeosil™, under the designations 115GR, 125GR, 165GR, 175GR, 185GR, 195GR, 1085GR, 1165MP, 1115MP, HRS 1200MP, Premium MP, Premium 200MP, and 195HR; from Evonik as Ultrasil™, under the designations VN2, VN3, VN3GR, 5000GR, 7000GR, 9000GR, as Zeopol™, under the designations 8755LS and 8745; from Wuxi Quechen Silicon Chemical Co., Ltd. as Newsil™, under the designations 115GR and 2000MP; from Maruo Calcium Co., Ltd., as Tokusil™ 315, and silicas derived from rice husk ash from Yihai Food and Oil Industry, China. Any precipitated silica can be used in the method. In other aspects, the untreated precipitated silica is prepared as a wet filtered material shortly before use.

In some aspects, the untreated silica is diluted in water (or other aqueous medium that is predominantly water) to form an aqueous slurry. In one aspect, the slurry can contain from 5-30 wt % silica, or at least 10 wt % silica, or another suitable dilution that is able to be pumped through a spray dryer. In any of these aspects, the pH of the slurry can be adjusted, e.g., to a pH of from 6 to 7.

In one aspect, a silica gel can be derived, for example, by hydrophobating a silica hydrogel with, for example, an organomercaptosilane and alkyl silane and drying the product.

In some aspects, the temperature of the slurry is raised to (or maintained at) a temperature at which the coupling agent reacts with the hydrated surface of the silica, but which is below the boiling point of water, e.g., at least 20 °C, or at least 40 °C, or at least 60 °C, or up to 90 °C, or up to 95° C, such as between 80 and 85 °C. In a further aspect, the silica coupling agent is allowed to react with the silica for a time which is sufficient to allow completion of the reaction.

In some aspects, the slurry is then dried, e.g., by spray drying, at a temperature above the boiling point of water, such as at least 130 °C or at least 150 °C. In one aspect, the dried product can be in the form of substantially spherical beads, granules, or a powder (all of which are generally referred to herein as particles).

In one aspect, the disclosed rubber composition can include from 50 phr to 130 phr of silica. In some aspects, precipitated silicas are preferred such as, for example, those obtained by the acidification of a soluble silicate, e.g., sodium silicate. In one aspect, such conventional silicas might be characterized, for example, by having a BET surface area, as measured using nitrogen gas, preferably ranging from 40 square meters per gram to 600 square meters per gram, from 50 square meters per gram to 300 square meters per gram, or from 110 square meters per gram to 250 square meters per gram. In another aspect, the conventional silica can also be typically characterized by having a dibutylphthalate (DBP) absorption value from 100 to 400, or from 150 to 300.

In one aspect, the pretreated silica material can have a CTAB surface area of at least 30 $m^2$/g, or at least 50 $m^2$/g, or at least 100 $m^2$/g, or at least 200 $m^2$/g, or up to 300 $m^2$/g, or up to 400 $m^2$/g, or up to 500 $m^2$/g, as measured according to ASTM D6845-20. In one aspect, the untreated precipitated silica can have a pH of 6-8, resulting from residual sodium sulfate.

The conventional silica is expected to have an average ultimate particle size, for example, in the range of 0.01 micron to 0.05 micron as determined by the electron micro-scope, although the silica particles can have larger or smaller diameters in some aspects.

Various commercially available silicas may be used, such as, only for example herein, and without limitation, silicas commercially available from PPG Industries under the Hi-Sil trademark with designations 210, 243, 315 and the like; silicas available from Rhodia, with, for example, designations of Z1165MP and Z165GR; and silicas available from Degussa AG with, for example, designations VN2 and VN3.

Nonionic Surfactant

The rubber compositions disclosed herein include one or more nonionic surfactants. In one aspect, the nonionic surfactant remains primarily on the silica particles and/or near the silica surface, depending on concentration. In some aspects, part of the nonionic surfactant molecule can remain in the rubber phase as an individual molecule or phase-separated. In another aspect, the nonionic surfactant does not undergo any chemical transformations.

In one aspect, the nonionic surfactant can be $CH_3\text{-}(CH_2)_n\text{-}(O\text{-}(CH_2)_x)_m\text{-}OR$ (Formula I) wherein n is an integer from 1 to 18 (i.e., 1, 2, 3, 4, 5, 6, 7, 8, 9, 10, 11, 12, 13, 14, 15, 16, 17, or 18); wherein x is an integer from 1 to 8 (i.e., 1, 2, 3, 4, 5, 6, 7, or 8); wherein m is an integer from 1 to 15 (i.e., 1, 2, 3, 4, 5, 6, 7, 8, 9, 10, 11, 12, 13, 14, or 15); and wherein R is a branched or straight chain C1-C20 alkyl group (i.e., C1, C2, C3, C4, C5, C6, C7, C8, C9, C10, C11, C12, C13, C14, C15, C16, C17, C18, 019, or 020).

In an aspect, the nonionic surfactant can be an alcohol ethoxylate, a random alcohol ethoxylate-propoxylate, a poloxamer, an alcohol ethoxysulfate, or any combination thereof. In one aspect, R in Formula I is a residue of 1-tridecanol, 2-tridecanol, 3-tridecanol, 4-tridecanol, 5-tridecanol, 6-tridecanol, or isotridecanol.

In an aspect, the nonionic surfactant can be provided as a liquid such as a C9-C11 alcohol ether ethoxylated with a chain of 6 polyoxyethylene units. In one aspect, the nonionic surfactant can have a hydroxyl number of from 100 to 200 mgKOH/g, 120 to 160 mgKOH/g, or 125 to 140 mgKOH/g. In another aspect, the nonionic surfactant can have a pH of from 6.5 to 7.5 when mixed with aqueous solution at 1% w/w, from 6.8 to 7.2, or from 6.9 to 7.1. In another aspect, the nonionic surfactant can have a viscosity of from 10 to 30 cSt at 40 °C, or of 15 to 25 cSt, or from 18 to 22 cSt. In still another aspect, the nonionic surfactant can have a density of from 0.95 g/mL to 1.05 g/mL, 0.96 g/mL to 1 g/mL, or 0.98 g/mL to 0.99 g/mL. In some aspects, the nonionic surfactant can have a hydroxyl number of 133 mgKOH/g, a pH of 7.0 when mixed with aqueous solution at 1% w/w, a viscosity of 21 cSt at 40 °C, and a density of 0.9877 g/mL. In one aspect, the nonionic surfactant is an ethoxylated tridecanol, where in Formula I, n is 1, x is 2, and R is a residue of a tridecanol. In another aspect, nonionic surfactant is ethoxylated 1-tridecanol, ethoxylated 2-tridecanol, ethoxylated 3-tridecanol, ethoxylated 4-tridecanol, ethoxylated 5-tridecanol, ethoxylated 6-tridecanol, or ethoxylated isotridecanol, In another aspect, the nonionic surfactant can be Alkosynt® 9160 or Alkosynt® IT 60 manufactured by Oxiteno (São Paulo, Brazil).

In an alternative aspect, the nonionic surfactant can be a liquid such as a C12 branched alcohol ether ethoxylated with a chain of 8 polyoxyethylene units. In some aspects, the nonionic surfactant is partially soluble in water at ambient temperature. In still another aspect, the nonionic surfactant can have an activity index of 0.5 mgKOH/g or less and a pH when mixed with water of from 6 to 7.5.

In some aspects, in the rubber compositions described herein, the nonionic surfactant has a molecular weight of from 100 Da to 2000 Da, or from 200 Da to 1000 Da, or of 100, 150, 200, 250, 300, 350, 400, 450, 500, 550, 600, 650, 700, 750, 800, 850, 900, 950, 1000, 1100, 1200, 1300, 1400, 1500, 1600, 1700, 1800, 1900, or 2000 Da.

In another aspect, in the rubber composition, the nonionic surfactant comprises from 3 to 12 ethylene oxide units, or 3, 4, 5, 6, 7, 8, 9, 10, 11, or 12 ethylene oxide units. In another aspect, in the rubber composition, the nonionic surfactant comprises a hydrophilic-lipophilic balance (HLB) value of from 11.4 to 12.4, or 11.4, 11.5, 11.6, 11.7, 11.8, 11.9, 12.0, 12.1, 12.2, 12.3, or 12.4. Further in this aspect, hydrophilic-lipophilic balance (HLB) is the balance of the size and strength of the hydrophilic and lipophilic moieties of a surfactant molecule. The HLB scale ranges from 0 to 20. In one aspect, HLB can be calculated using Grifin's method for non-ionic surfactants as follows: HLB = 20 × $M_h$/M, where $M_h$ is the molar mass of the hydrophilic portion of the molecule and M is the molar mass of the whole molecule. In one aspect, an HLB value of 0 refers to a completely lipophilic molecule, while 20 refers to a completely hydrophilic molecule. In an alternative aspect, HLB can be calculated using Davies's method as follows: $$HLB = 7 + \sum_{i=1}^{m} H_i - n \times 0.475$$ where m is the number of hydrophilic groups in the molecule, $H_i$ is the value of the i$^{th}$ hydrophilic group, and n is the number of lipophilic groups in the molecule. $H_i$ values are obtained from tables with free hydroxyls having a value of 1.9, ether oxygens having a value of 1.3, and the like.

In any of these aspects, in the rubber compositions described herein, the nonionic surfactant can be present at from 0.5 phf to 15 phf, from 1 phf to 10 phf, or is 0.5, 1, 2, 3, 4, 5, 6, 7, 8, 9, 10, 11, 12, 13, 14, or 15 phf (parts by weight per hundred parts by weight of filler, where the untreated silica is the filler).

In one aspect, the nonionic surfactant and one or more optional components (e.g., a coupling agent) are added to the slurry, either in sequence, or at the same time, and are mixed with the untreated silica. In another aspect, at least part of the nonionic surfactant is added first, to aid in dispersion of the silica, followed by addition of one or more optional components (e.g., a coupling agent). In a further aspect, the mixing of the untreated silica and nonionic surfactant can be carried out at room temperature (e.g., under 30 °C).

Additional Components

In some aspects, an organosilane coupling agent is used to produce the disclosed rubber compositions. In one aspect, the organosilane coupling agent used can include a first reactive moiety which includes a silicon atom and at least one hydrolyzable group, and a second reactive moiety capable of reaction with a double bond of a vulcanizable elastomer, the first and second reactive moieties being connected by a bridging unit comprising at least one of a polysulfide and a hydrocarbylene group. Further in this aspect, at least one of the hydrolyzable groups of the first reactive moiety can be selected from an alkoxy group and an aminoalkyl group. In some aspects, the coupling agent can be selected from bis(trialkoxysilylalkyl) polysulfides, bis(alkoxyaryloxysilylalkyl) polysulfides, bis(triaryloxysilyl-alkyl) polysulfides, and mixtures thereof.

In some aspects, the rubber composition can include up to 10 phr of a processing oil. In one aspect, the amount of processing oil ranges from 1 phr to 5 phr. In an alternative aspect, the rubber composition is devoid of processing oil. In a further aspect, processing oil can be included in the rubber composition as extending oil typically used to extend elastomers, or by addition of the oil directly during rubber compounding. In some aspects, the processing oil used can include both extending oil present in the elastomers and processing oil added during compounding. In a further aspect, suitable process oils include various oils as are known in the art, including aromatic, paraffinic, naphthenic, and low PCA oils, such as MES, TDAE, and heavy naphthenic oils, and vegetable oils such as sunflower, soybean, and safflower oils.

In one aspect, the rubber composition can include a low PCA oil. Suitable low PCA oils include, but are not limited to, mild extraction solvates (MES), treated distillate aromatic extracts (TDAE), and heavy naphthenic oils as known in the art. Generally, suitable low PCA oils include those having a glass transition temperature $T_g$ in a range of from -40 °C to -80 °C. MES oils generally have a $T_g$ in a range of from -57 °C to -63 °C. TDAE oils generally have a $T_g$ in a range of from -44 °C to -50 °C. Heavy naphthenic oils generally have a $T_g$ in a range of from -42 °C to -48 °C. A suitable measurement for $T_g$ of TDAE oils is DSC according to ASTM E1356, or an equivalent.

In one aspect, suitable low PCA oils include those having a polycyclic aromatic content of less than 3 percent by weight as determined by the IP 346 method. Procedures for the IP346 method may be found in Standard Methods for Analysis and Testing of Petroleum and Related Products and British Standard 2000 Parts, 2003, 62nd edition, published by the Institute of Petroleum, United Kingdom.

Suitable TDAE oils are available as Tudalen SX500 from Klaus Dahleke KG, VivaTec 400 and VivaTec 500 from H&R Group, Enerthene 1849 from BP, and Extensoil 1996 from Repsol. The oils can be available as the oil alone or along with an elastomer in the form of an extended elastomer. Suitable vegetable oils include, for example, soybean oil, sunflower oil, and canola oil which are in the form of esters containing a certain degree of unsaturation.

In one aspect, the rubber composition can optionally include from 1 phr to 50 phr of carbon black. Commonly employed carbon blacks can be used as a conventional filler. Representative examples of such carbon blacks include N!!0, N121, N134, N220, N231, N234, 55 N242, N293, N299, 5315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 g/kg to 145 g/kg and DBP numbers ranging from 34 cm$^3$/100 g to 150 cm$^3$/100 g.

Other fillers can be used in the rubber composition including, but not limited to, particulate fillers including ultra-high molecular weight polyethylene (UHMWPE), particulate polymer gels, and plasticized starch composite filler.

In some aspects, it may be preferred to have the rubber composition for use in the tire component to additionally contain a conventional sulfur containing organosilicon compound. Examples of suitable sulfur containing organosilicon compounds include 3,3'-bis(trimethoxysilylpropyl) disulfide, 3,3'-bis (triethoxysilylpropyl) disulfide, 3,3'-bis(triethoxysilylpropyl) tetrasulfide, 3,3'-bis(triethoxysilylpropyl) octasulfide, 3,3'-bis(trimethoxysilylpropyl) tetrasulfide, 2,2'-bis(triethoxysilylethyl) tetrasulfide, 3,3'-bis(trimethoxysilylpropyl) trisulfide, 3,3'-bis(triethoxysily lpropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(trihexoxysilylpropyl) disulfide, 3,3'-bis(tri-2"-ethylhexoxysilylpropyl) trisulfide, 3,3'-bis(triisooctoxysilylpropyl) tetrasulfide, 3,3'-bis(tri-tbutoxysilylpropyl)disulfide, 2,2'-bis(methoxy diethoxysilylethyl) tetrasulfide, 2,2'-bis(tripropoxysilylethyl) pentasulfide, 3,3'-bis(tricyclonexoxysilylpropyl) tetrasulfide, 3,3'-bis(tricyclopentoxysilylpropyl) trisulfide, 2,2'-bis(tri-2"-methylcyclohexoxysilylethyl) tetrasulfide, bis(trimethoxysilylmethyl) tetrasulfide, 3-methoxyethoxypropoxysilyl 3'-diethoxybutoxysilylpropyltetrasulfide, 2,2'-bis(dimethylmethoxysilylethyl) disulfide, 2,2'-bis(dimethyl sec-butoxysilylethyl) trisulfide, 3,3'-bis(methyl butylethoxysilylpropyl) tetrasulfide, 3,3'-bis(di-t-butylmethoxysilylpropyl) tetrasulfide, 2,2'-bis(phenylmethylmethoxysilylethyl) trisulfide, 3,3'-bis(diphenylisopropoxysilylpropyl) tetrasulfide, 3,3'-bis(diphenylcyclohexoxysilylpropyl) disulfide, 3,3'-bis(dimethylethylmercaptosilylpropyl) tetrasulfide, 2,2'-bis(methyldimethoxysilylethyl) trisulfide, 2,2'-bis(methylethoxypropoxysilylethyl) tetrasulfide, 3,3'-bis(diethylmethoxysilylpropyl) tetrasulfide, 3,3'-bis(ethyl-di-sec-butoxysilylpropyl) disulfide, 3,3'-bis(propyl diethoxysilylpropyl) disulfide, 3,3'-bis(butyl dimethoxysilylpropyl) trisulfide, 3,3'-bis(phenyldimethoxysilylpropyl) tetrasulfide, 3-phenylethoxybutoxysilyl 3'-trimethoxysilylpropyltetrasulfide, 4,4'-bis(trimethoxysilylbutyl) tetrasulfide, 6,6'-bis(triethoxysilylhexyl) tetrasulfide, 12,12'-bis(triisopropoxysilyldodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilylbuten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide, or combinations thereof.

In one aspect, the amount of the sulfur containing organosilicon compound in a rubber composition can vary depending on the level of other additives that are used. Generally speaking, the amount of the compound will range from 0.5 phr to 20 phr, or from 1 phr to 10 phr.

Preparation of Rubber Compositions and Applications Thereof

It is readily understood by those having skill in the art that the disclosed rubber compositions can be compounded by methods generally known in the rubber compounding art, such as mixing the various sulfur-vulcanizable constituent rubbers with various commonly used additive materials such as, for example, sulfur donors, curing aids, such as activators and retarders, fillers, pigments, fatty acid, zinc oxide, waxes, antioxidants and antiozonants, and peptizing agents. As known to those skilled in the art, depending on the intended use of the sulfur vulcanizable and sulfur-vulcanized material (rubbers), the additives mentioned above are selected and commonly used in conventional amounts.

Representative examples of sulfur donors include elemental sulfur (free sulfur), an amine disulfide, polymeric polysulfide, and sulfur olefin adducts. In one aspect, the sulfur-vulcanizing agent is elemental sulfur. The sulfur-vulcanizing agent can be used in an amount ranging from 0.5 phr to 8 phr, or from 1.5 phr to 6 phr. Typical amounts of antioxidants can be from 1 phr to 5 phr. Representative antioxidants can be, for example, diphenyl-p-phenylenediamine and others. Typical amounts of antiozonants can be from 1 phr to 5 phr. Typical amounts of fatty acids, if used, can be from 0.5 phr to 3 phr. In one aspect, useful fatty acids include, but are not limited to, stearic acid. Typical amounts of zinc oxide can be from 2 phr to 5 phr. Typical amounts of waxes can be from 1 phr to 5 phr. Often microcrystalline waxes are used. Typical amounts of peptizers can be from 0.1 phr to 1 phr. Typical peptizers may be, for example, pentachlorothiophenol and dibenzamidodiphenyl disulfide.

In some aspects, accelerators can be used to control the time and/or temperature required for vulcanization and to improve the properties of the vulcanizate. In one aspect, a single accelerator system can be used, i.e., primary accelerator. The primary accelerator(s) can be used in total amounts ranging from 0.5 phr to 4 phr, or from 0.8 phr to 1.5 phr. In another aspect, combinations of a primary and a secondary accelerator can be used with the secondary accelerator being used in smaller amounts, such as from 0.05 phr to 3 phr in order to activate and to improve the properties of the vulcanizate. Combinations of these accelerators might be expected to produce a synergistic effect on the final properties and may perform better than those rubbers produced by use of either accelerator alone. In an additional aspect, delayed action accelerators can be used; these are not affected by normal processing temperatures, but produce a satisfactory cure at ordinary vulcanization temperatures.

In some aspects, vulcanization retarders can also be used. Suitable types of accelerators that can be used in the present invention are amines, disulfides, guanidines, thioureas, thiazoles, thi-urams, sulfonamides, dithiocarbamates, and xanthates. In one aspect, the primary accelerator is a sulfonamide. If a second accelerator is used, the secondary accelerator can be a guanidine, dithiocarbamate, or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage, which is conventionally called the "productive" mix stage in which the mixing typically occurs at a temperature, or ultimate temperature, lower than the mix temperature(s) than the preceding non-productive mix stage(s).

In some aspects, the rubber composition can be subjected to a thermomechanical mixing step. The thermomechanical mixing step generally includes a mechanical working in a mixer or extruder for a period of time suitable in order to produce a rubber temperature between 140 °C and 190 °C. The appropriate duration of the thermomechanical working varies as a function of the operating conditions and the volume and nature of the components. For example, the thermomechanical working may be from 1 minute to 20 minutes.

In a further aspect, the rubber composition can be incorporated in a variety of rubber components of a tire. For example, the rubber component can be a tread (including tread cap and tread base), sidewall, apex, chafer, sidewall insert, wirecoat, or innerliner. In one aspect, the component is a tread. The pneumatic tire of the present invention may be a race tire, passenger tire, aircraft tire, agricultural, earthmover, off-the-road, truck tire, or the like. In one aspect, the tire is a passenger or truck tire. The tire can also be a radial or bias.

Vulcanization of the disclosed pneumatic tires is generally carried out at conventional temperatures ranging from 100 °C to 200 °C, or from 110 °C to 180 °C. Such tires can be built, shaped, molded and cured by various methods which are known and will be readily apparent to those having skill in such art.

Now having described the aspects of the present disclosure, in general, the following Examples describe some additional aspects of the present disclosure. While aspects of the present disclosure are described in connection with the following examples and the corresponding text and figures, there is no intent to limit aspects of the present disclosure to this description. On the contrary, the intent is to cover all alternatives, modifications, and equivalents included within the spirit and scope of the present disclosure.

ASPECTS

The present disclosure can be described in accordance with the following numbered Aspects, which should not be confused with the claims.

Aspect 1. A rubber composition comprising a plurality of silica particles, a nonionic surfactant having a hydrophilic lipophilic balance (HLB) value of from 8 to 14, and at least one rubber material.

Aspect 2. The rubber composition of aspect 1, wherein the nonionic surfactant comprises an alcohol ethoxylate, a random alcohol ethoxylate-propoxylate, a poloxamer, an alcohol ethoxysulfate, or any combination thereof.

Aspect 3. The rubber composition of aspect 1, wherein the nonionic surfactant comprises $CH_3\text{-}(CH_2)_n\text{-}(O\text{-}(CH_2)_x)_m\text{-}OR$; wherein n is an integer from 1 to 18; wherein x is an integer from 1 to 8; wherein m is an integer from 1 to 15; and wherein R is a branched or straight chain C1-C20 alkyl group.

Aspect 4. A rubber composition comprising a plurality of silica particles, a nonionic surfactant, and at least one rubber material, wherein the nonionic surfactant comprises $CH_3\text{-}(CH_2)_n\text{-}(O\text{-}(CH_2)_x)_m\text{-}OR$; wherein n is an integer from 1 to 18; wherein x is an integer from 1 to 8; wherein m is an integer from 1 to 15; and wherein R is a branched or straight chain C1-C20 alkyl group.

Aspect 5. The rubber composition of aspect 3 or 4, wherein R is a residue of 1-tridecanol, 2-tridecanol, 3-tridecanol, 4-tridecanol, 5-tridecanol, 6-tridecanol, or isotridecanol.

Aspect 6. The rubber composition of any one of aspects 1-5, wherein the nonionic surfactant comprises an ethoxylated tridecanol.

Aspect 7. The rubber composition of any one of aspects 1-5, wherein the nonionic surfactant is ethoxylated isotridecanol.

Aspect 8. The rubber composition of any one of aspects 1-7, wherein the nonionic surfactant has a molecular weight of from 100 Da to 2000 Da.

Aspect 9. The rubber composition of any one of aspects 18, wherein the nonionic surfactant comprises from 3 to 12 ethylene oxide units.

Aspect 10. The rubber composition of any one of aspects 1-8, wherein the nonionic surfactant comprises 6 ethylene oxide units.

Aspect 11. The rubber composition of any one of aspects 1-10, wherein the nonionic surfactant comprises an HLB value of from 11.4 to 12.4.

Aspect 12. The rubber composition of any one of aspects 1-11, wherein the nonionic surfactant is present at from 0.5 phf to 15 phf.

Aspect 13. The rubber composition of any one of aspects 1-11, wherein the nonionic surfactant is present at 3 phf.

Aspect 14. The rubber composition of any one of aspects 1-13, wherein the silica particles have a Brunauer-Emmett-Teller (BET) surface area of from 110 $m^2$/g to 250 $m^2$/g.

Aspect 15. The rubber composition of any one of aspects 1-14, wherein the silica particles are present at from 10 phr to 150 phr.

Aspect 16. The rubber composition of any one of aspects 1-14, wherein the silica particles are present at 65 phr.

Aspect 17. The rubber composition of any one of aspects 1-15, wherein the rubber comprises natural rubber, cis-polybutadiene, solution styrene butadiene rubber (sSBR), or any combination thereof.

Aspect 18. The rubber composition of any one of aspects 1-15, wherein the rubber is a combination of sSBR and cis-polybutadiene.

Aspect 19. The rubber composition of aspect 17 or 18, wherein the sSBR is present at from 30 phr to 100 phr and the cis-polybutadiene is present at from 10 phr to 60 phr.

Aspect 20. The rubber composition of aspect 17 or 18, wherein the sSBR is present at 70 phr and the cis-polybutadiene is present at 30 phr.

Aspect 21. The rubber composition of any one of aspects 1-20, wherein the rubber composition is uncured.

Aspect 22. The rubber composition of any one of aspects 1-21, wherein the rubber composition is cured.

Aspect 23. A silica particle composition comprising a plurality of silica particles and one or more nonionic surfactants selected from an alcohol ethoxylate, a random alcohol ethoxylate-propoxylate, a poloxamer, an alcohol ethoxysulfate, or any combination thereof.

Aspect 24. A rubber composition comprising the silica particle composition of aspect 23 and at least one rubber material.

Aspect 25. An article comprising the rubber composition of any one of aspects 1-19 or 24.

Aspect 26. The article of aspect 25, wherein the article comprises a tire.

Aspect 27. The article of aspect 26, wherein the tire is a truck tire.

Aspect 28. The article of aspect 26 or 27, wherein a tread of the tire comprises the rubber composition.

EXAMPLES

The following examples are put forth so as to provide those of ordinary skill in the art with a complete disclosure and description of how the compounds, compositions, articles, devices and/or methods claimed herein are made and evaluated, and are intended to be purely exemplary of the disclosure and are not intended to limit the scope of what the inventors regard as their disclosure. Unless indicated otherwise, parts are parts by weight, temperature is in °C or is at ambient temperature, and pressure is at or near atmospheric.

Example 1: Rubber Compositions

Exemplary formulations are presented in Table 1. A control sample was prepared (sample 1) using silane and standard levels of other ingredients. Samples 2 and 3 contain nonionic surfactant dispersants, while 4 has added stearic acid as a secondary control. In rubber processing, stearic acid functions as a dispersant as well as a cure activator in rubber compounds.

| Table 1: Exemplary Rubber Compositions | | | | |
|---|---|---|---|---|
| **Sample** | **1** | **2** | **3** | **4** |
| | Control | Nonionic surfactant 1 | Nonionic surfactant 2 | Added Stearic Acid |
| Functionalized s-SBR | 70 | 70 | 70 | 70 |
| cis-polybutadiene | 30 | 30 | 30 | 30 |
| Precipitated silica | 65 | 65 | 65 | 65 |
| Naphthenic processing oil | 20 | 20 | 20 | 20 |
| Silane, Si266 | 6.5 | 6.5 | 6.5 | 6.5 |
| Stearic Acid | 2 | 2 | 2 | 5 |
| Zinc Oxide | 1.5 | 1.5 | 1.5 | 1.5 |
| Carbon black, N330 | 5 | 5 | 5 | 5 |
| Wax | 1.5 | 1.5 | 1.5 | 1.5 |
| 6-PPD ($N^1$-(4-methylpentan-2-yl)-$N^4$-phenylbenzene-1,4-diamine) | 2 | 2 | 2 | 2 |
| Alcohol ethoxylate 1 | | 3 | | |
| Alcohol ethoxylate 2 | | | 3 | |
| Accelerators | 3.4 | 3.4 | 3.4 | 3.4 |
| Sulfur | 1.2 | 1.2 | 1.2 | 1.2 |

Nonionic surfactant 1 is Alkosynt® 9160 obtained from Oxiteno (São Paulo, Brazil). Nonionic surfactant 2 is Alkosynt® IT 60 obtained from Oxiteno (São Paulo, Brazil).

Example 2: Properties of the Rubber Compositions

Rheological properties of the exemplary rubber compositions from Table 1 are shown in Table 2. Data was collected using a moving die rheometer at 150 °C according to ASTM D5289.

| Table 2: Rheological Properties of the Rubber Compositions | | | | |
|---|---|---|---|---|
| **Sample** | **1** | **2** | **3** | **4** |
| | Control | Nonionic surfactant 1 | Nonionic surfactant 2 | Added Stearic Acid |
| Max Torque (dNm) | 19.15 | 19.95 | 20.02 | 17.92 |
| Min Torque (dNm) | 3.11 | 2.81 | 2.77 | 2.82 |
| Delta Torque (dNm) | 16.04 | 17.14 | 17.25 | 15.1 |
| Final Torque (dNm) | 19.1 | 19.93 | 20.01 | 17.64 |
| T25 (min) | 8.34 | 8.23 | 7.98 | 6.64 |
| T90 (min) | 19.79 | 23.12 | 22.3 | 13.62 |

Table 2 shows the minimum and maximum torque values and the delta torque, which is the difference between the two. The minimum torque is a measurement of the uncured viscosity of the rubber. It is seen that the samples with the nonionic surfactants have a lower minimum torque value which indicates better processing. This is also reflected in the uncured rubber process analyzer (RPA) G' data (see Table 3).

RPA testing was conducted using ASTM D7605. Temperature was 100 °C and angle was 15%. Results are presented in Table 3:

| Table 3: Rubber Process Analyzer Testing | | | | |
|---|---|---|---|---|
| Sample | 1 | 2 | 3 | 4 |
|  | Control | Nonionic surfactant 1 | Nonionic surfactant 2 | Added Stearic Acid |
| G' at 0.833 Hz (kPa) | 247.51 | 224.133 | 223.89 | 235.536 |
| G' at 1% (kPa) | 2334.269 | 2221.75 | 2269.586 | 2582.048 |
| G' at 5% (kPa) | 1856.909 | 1815.275 | 1841.189 | 1999.468 |
| G' at 10% (kPa) | 1617.659 | 1576.799 | 1599.827 | 1726.488 |
| Tan $\delta$ at 5% | 0.121 | 0.107 | 0.108 | 0.135 |
| Tan $\delta$ at 10% | 0.119 | 0.110 | 0.111 | 0.136 |

The uncured data shown is the G' (storage or elastic modulus) at 100 °C. The two samples with nonionic surfactant have lower uncured G' values than either control, as measured by the RPA. This is significant as even the added stearic acid does not give a uncured G' as low as the added nonionic surfactant. These results indicate the nonionic surfactant samples represent a better or easier to process rubber composition.

The cured RPA properties shown are the G' at 1%, 5%, and 10% strain. The G' values of the nonionic surfactant containing samples can be considered roughly equivalent to the control. The addition of stearic acid does result in slightly higher cured G' values.

The tan $\delta$ at 5% and 10% strain values from the RPA are also shown. The tan $\delta$ is the loss modulus G" divided by the storage modulus G' and is a measurement of the hysteresis of the rubber compound, where hysteresis is an indicator of the compound rolling resistance or the fuel economy of a tire containing the composition. The samples with the nonionic surfactant have lower tan $\delta$ values than either control composition.

The tensile properties (measured according to ASTM D412) are shown in Table 4. The tensile values can be considered roughly equivalent for control and experimental samples.

| Table 4: Tensile Properties | | | | |
|---|---|---|---|---|
| Sample | 1 | 2 | 3 | 4 |
|  | Control | Nonionic surfactant 1 | Nonionic surfactant 2 | Added Stearic Acid |
| Modulus at 100% (MPa) | 2.1 | 2.0 | 2.2 | 2.2 |
| Modulus at 300% (MPa) | 9.0 | 8.2 | 9.0 | 9.0 |
| Tensile stress at maximum (MPa) | 14.8 | 15.6 | 15.1 | 15.9 |
| Tensile strain at maximum (%) | 417.5 | 463.2 | 426.1 | 439.4 |

The data collected in Table 4 indicate that the nonionic surfactant dispersants are easier to process and have a lower hysteresis cured property, which is an indicator of better fuel economy when used in a tire.

## Claims

1. A rubber composition comprising a plurality of silica particles, a nonionic surfactant having a hydrophilic lipophilic balance (HLB) value of from 8 to 14, and at least one rubber material.

2. The rubber composition of claim 1, wherein the nonionic surfactant comprises $CH_3\text{-}(CH_2)_n\text{-}(O\text{-}(CH_2)_x)_m\text{-}OR$; wherein n is an integer from 1 to 18; wherein x is an integer from 1 to 8; wherein m is an integer from 1 to 15; and wherein R is a branched or straight chain C1-C20 alkyl group.

3. The rubber composition of claim 1 or 2, wherein the nonionic surfactant is present at from 0.5 phf to 15 phf; and/or wherein the silica particles are present at from 10 phr to 150 phr.

4. The rubber composition of claim 1, 2 or 3, wherein the rubber comprises natural rubber, cis-polybutadiene, solution styrene butadiene rubber (sSBR), or any combination thereof.

5. The rubber composition of at least one of the previous claims, wherein the rubber is a combination of sSBR and cis-polybutadiene.

6. The rubber composition of claim 5, wherein the sSBR is present at from 30 phr to 100 phr and the cis-polybutadiene is present at from 10 phr to 60 phr; or wherein the sSBR is present at 70 phr and the cis-polybutadiene is present at 30 phr.

7. The rubber composition of at least one of the previous claims, wherein the nonionic surfactant has a molecular weight of from 100 Da to 2000 Da.

8. The rubber composition of at least one of the previous claims, wherein the nonionic surfactant comprises from 3 to 12 ethylene oxide units; and/or wherein the nonionic surfactant comprises an ethoxylated tridecanol.

9. The rubber composition of at least one of the previous claims, wherein the nonionic surfactant comprises an HLB value of from 11.4 to 12.4.

10. The rubber composition of at least one of the previous claims, wherein R is a residue of 1-tridecanol, 2-tridecanol, 3-tridecanol, 4-tridecanol, 5-tridecanol, 6-tridecanol, or isotridecanol.

11. A silica particle composition comprising a plurality of silica particles and one or more nonionic surfactants selected from an alcohol ethoxylate, a random alcohol ethoxylate-propoxylate, a poloxamer, an alcohol ethoxysulfate, or any combination thereof.

12. A rubber composition comprising the silica particle composition of claim 11 and at least one rubber material.

13. An article comprising the rubber composition of at least one of the previous claims.

14. The article of claim 13, wherein the article comprises a tire or a truck tire.

15. The article of claim 14, wherein a tread of the tire comprises the rubber composition.

Europäisches
Patentamt

European
Patent Office

Office européen
des brevets

# EUROPEAN SEARCH REPORT

**Application Number**

EP 24 21 1341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 296 075 A1 (LANXESS DEUTSCHLAND GMBH [DE]) 27 December 2023 (2023-12-27) * examples 2,3; table 2 * | 1,3-8, 11-15 | INV. B60C1/00 C08L7/00 C08L9/06 C08L15/00 |
| X | EP 1 829 922 A1 (DEGUSSA [DE]) 5 September 2007 (2007-09-05) * example 6 * | 1-4,7,8, 10-15 | |
| X | EP 3 222 659 B1 (SUMITOMO RUBBER IND [JP]) 5 August 2020 (2020-08-05) * examples 1-6; table 1 * | 1-4, 10-15 | |
| X | JP 2014 031419 A (BRIDGESTONE CORP; KAO CORP) 20 February 2014 (2014-02-20) * examples 1-7; table 2 * * examples 1-3; table 1 * | 1-4,7-15 | |

|  |
|---|
| TECHNICAL FIELDS SEARCHED (IPC) |
| B60C C08L |

The present search report has been drawn up for all claims

| Place of search | Date of completion of the search | Examiner |
|---|---|---|
| Munich | 14 February 2025 | Laïb, Samia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  .........................................................................

& : member of the same patent family, corresponding
document

EPO FORM 1503 03.82 (P04C01)

**EP 4 556 258 A1**

## ANNEX TO THE EUROPEAN SEARCH REPORT
## ON EUROPEAN PATENT APPLICATION NO.

EP 24 21 1341

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2025

| Patent document cited in search report | | Publication date | Patent family member(s) | | Publication date |
|---|---|---|---|---|---|
| EP 4296075 | A1 | 27-12-2023 | EP | 4296075 A1 | 27-12-2023 |
| | | | EP | 4296078 A1 | 27-12-2023 |
| EP 1829922 | A1 | 05-09-2007 | AT | E424434 T1 | 15-03-2009 |
| | | | BR | PI0700454 A | 06-11-2007 |
| | | | CN | 101024711 A | 29-08-2007 |
| | | | DE | 102006008670 A1 | 30-08-2007 |
| | | | EP | 1829922 A1 | 05-09-2007 |
| | | | ES | 2322513 T3 | 22-06-2009 |
| | | | JP | 5237568 B2 | 17-07-2013 |
| | | | JP | 2007231272 A | 13-09-2007 |
| | | | KR | 20070088380 A | 29-08-2007 |
| | | | PL | 1829922 T3 | 31-08-2009 |
| | | | RU | 2007106746 A | 27-08-2008 |
| | | | TW | 200804490 A | 16-01-2008 |
| | | | UA | 90862 C2 | 10-06-2010 |
| | | | US | 2007203274 A1 | 30-08-2007 |
| EP 3222659 | B1 | 05-08-2020 | CN | 107001709 A | 01-08-2017 |
| | | | EP | 3222659 A1 | 27-09-2017 |
| | | | JP | 6193841 B2 | 06-09-2017 |
| | | | JP | 2016108515 A | 20-06-2016 |
| | | | US | 2017260373 A1 | 14-09-2017 |
| | | | WO | 2016093006 A1 | 16-06-2016 |
| JP 2014031419 | A | 20-02-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Standard Test Methods for Estimating Average Particle Size of Alumina and Silica Powders by Air Permeability. *ASTM C721-20*